(19) **Europäisches Patentamt**
**European Patent Office**
**Office européen des brevets**

(11) **EP 1 644 721 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(21) Anmeldenummer: **04740136.9**

(22) Anmeldetag: **21.06.2004**

(51) Int Cl.:
***G01N 21/55*** (2006.01)

(86) Internationale Anmeldenummer:
**PCT/EP2004/006702**

(87) Internationale Veröffentlichungsnummer:
**WO 2005/008224 (27.01.2005 Gazette 2005/04)**

(54) **SENSORANORDNUNG**

SENSOR ARRANGEMENT

SYSTEME DE CAPTEURS

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.07.2003 DE 10331517**

(43) Veröffentlichungstag der Anmeldung:
**12.04.2006 Patentblatt 2006/15**

(73) Patentinhaber: **Santhera Pharmaceuticals (Deutschland) GmbH**
**79539 Lörrach (DE)**

(72) Erfinder:
• **DICKOPF, Stefan**
**69118 Heidelberg (DE)**

• **BURKERT, Klaus**
**69126 Heidelberg (DE)**
• **MAIER, Alexander**
**74821 Mosbach (DE)**
• **SCHMIDT, Kristina**
**69198 Schriesheim (DE)**

(74) Vertreter: **HOFFMANN EITLE**
**Patent- und Rechtsanwälte**
**Arabellastrasse 4**
**81925 München (DE)**

(56) Entgegenhaltungen:
**EP-A- 1 286 187         WO-A-01/63256**
**US-A1- 2002 057 995     US-B1- 6 335 142**
**US-B1- 6 565 813**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Sensoranordnung für optische Messanordnungen, Verfahren zur Herstellung der Sensoranordnung sowie Verfahren zur Aufbringung von Flüssigkeitsproben auf eine Sensoranordnung.

Ein aktueller Ansatz zur Wirkstoffsuche besteht darin, eine große Anzahl diverser chemischer Verbindungen mittels automatisierter Syntheseapparaturen zu erzeugen. Diese Vielzahl an unterschiedlichen Strukturen wird dann auf Bindung mit Interaktionspartnern, die häufig Biomakromoleküle wie Proteine darstellen, getestet. Ein automatisiertes Verfahren, das auf diese Weise eine große Zahl von Proben sichtet, wird auch als High Throughput Screening bzw. Hochdurchsatz-Screening bezeichnet.

Aufgrund der biologischen Streuung der Messergebnisse bei Bindungsstudien ist es dabei besonders wichtig, für sämtliche Verbindungen beim Bindungstest exakt dieselben Bedingungen zu realisieren. Daher sollte der Test im Idealfall für sämtliche Proben möglichst gleichzeitig und mit derselben Lösung des zu untersuchenden Interaktionspartners durchgeführt werden, um Alterungseffekte und Temperaturdriften sowie unterschiedlich lange Bindungszeiten für die Verbindungen auszuschließen. Aufgrund der aufwendigen Verfahren zur Aufreinigung von Biomakromolekülen sollten die für den Test benötigten Mengen möglichst gering gehalten werden.

Neben der Parallelisierung der Messung ist eine Miniaturisierung der Mess- oder Sensorfelder in der Messvorrichtung von großer Bedeutung, um die Anzahl der Sensorfelder und deren Dichte zu erhöhen und so durch die Parallelisierung der Messung nicht nur zu vergleichbareren Ergebnissen sondern auch zu einer drastischen Erhöhung der Anzahl der Messungen pro Zeiteinheit zu gelangen.

Hierbei eingesetzte Methoden basieren häufig auf optischen Messverfahren. Neben optischen Verfahren, die ein Durchstahlen der Probe erfordern, sind reflexionsoptische Verfahren bekannt, die Strahlung, die zumindest teilweise an einer Grenzschicht reflektiert wurde, zur Untersuchung der Probe heranziehen.

Eine dieser reflexionsoptischen Methoden ist die Interferometrie, speziell für Bindungsuntersuchungen wird die Reflektometrische Interferenzspektroskopie (RIfS) verwendet.

Eine weitere, besonders effektive Methode zur Durchführung von Bindungstests ist die Oberflächenplasmonenresonanz-Spektroskopie (abgekürzt SPR, von englisch: Surface Plasmon Resonance). Bei SPR wird ein Interaktionspartner (z.B. Ligand) auf einer Metalloberfläche immobilisiert und dessen Bindung an einen anderen Interaktionspartner (z.B. Rezeptor) nachgewiesen. Dazu wird ein optischer Träger (meist ein Prisma) mit Gold beschichtet und der Intensitätsabfall des intern im Prisma reflektierten Lichtes als Funktion des eingestellten Winkels oder als Funktion der Wellenlänge detektiert (Kretschmann-Anordnung). Nachgewiesen wird letztendlich eine Brechungsindexänderung des Mediums auf der der Goldschicht gegenüberliegenden Seite, die auftritt, wenn Moleküle an die Oberfläche binden.

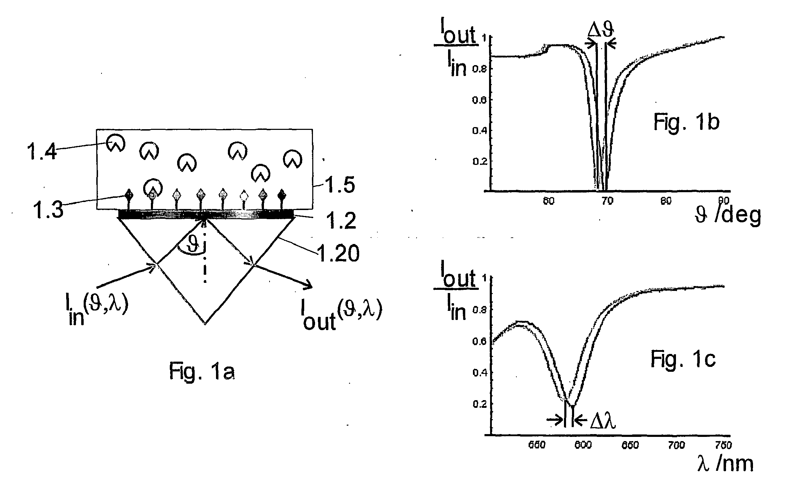

Fig. 1a zeigt schematisch die sogenannte Kretschmann-Geometrie, die vielfach zur Messung des SPR-Effektes benutzt wird. Hier wird eine auf einem Prisma 1.20 befindliche dünne Goldschicht 1.2 mit der zu untersuchenden Lösung 1.5 in benetzenden Kontakt gebracht. Auf der Goldschicht immobilisierte Liganden tragen das Bezugzeichen 1.3, während mögliche Interaktionspartner in der Lösung das Bezugzeichen 1.4 tragen. Gemessen wird üblicherweise die Intensität des intern an den Grenzschichten Glas/Gold/Flüssigkeit reflektierten Lichtes entweder als Funktion des Einfallswinkels $\vartheta$ oder als Funktion der Wellenlänge $\lambda$. Bei geeigneter Resonanzbedingung nimmt die Intensität des reflektierten Lichtes stark ab. Die Energie des Lichtes wird dann umgewandelt in Elektronen-Ladungsdichtewellen (Plasmonen) entlang der Grenzschicht Gold/Flüssigkeit. Die Resonanzbedingung lautet näherungsweise (aus Kapitel 4, "Surface Plasmon Resonance" in G. Ramsay, Commercial Biosensors, John Wiley & Sons (1998):

$$\frac{2\pi}{\lambda} n_{prism} \sin \vartheta \approx \frac{2\pi}{\lambda} \sqrt{\frac{n_{metal}^2(\lambda) n_{sample}^2}{n_{metal}^2(\lambda) + n_{sample}^2}}$$

Dabei ist $n_{prism}$ der Brechungsindex des Prismas, $n_{metal}$ der komplexe Brechungsindex der Metallschicht und $n_{sample}$ derjenige der Probe. $\vartheta$ und $\lambda$ sind Einfallswinkel und Wellenlänge des eingestrahlten Lichtes. Die Wellenlängenspektren (Fig. 1b) beziehungsweise die Winkelspektren (Fig. 1c) zeigen eine Abnahme der Intensität in dem Wellenlängenbereich beziehungsweise in dem Winkelbereich, bei dem die oben aufgeführte Resonanzbedingung erfüllt ist. Durch Veränderung des Brechungsindex in der Lösung $n_{sample}$ wird die Resonanzbedingung verändert, wodurch sich die Resonanzkurven verschieben. Der Wert der Verschiebung ist für kleine Veränderungen im Brechungsindex linear zu dieser Änderung (für größere Änderungen kann nötigenfalls eine Kalibrierung erfolgen). Da das reflektierte Licht nur wenige 100 nm in die Flüssigkeit eindringt, wird lokal in diesem Bereich die Brechungsindexänderung gemessen. Wenn die in der Lösung befindlichen Zielmoleküle (z.B. Proteine) 1.4 an geeignete Interaktionspartner 1.3, die auf der Oberfläche immobilisiert sind, binden (d.h. sich ein Assoziations-Dissoziationsgleichgewicht einstellt), erhöht sich lokal die Konzentration des Zielmoleküls an der Oberfläche, die dann als Brechungsindexänderung nachgewiesen werden kann.

Um die Eingangs erwähnten Bestrebungen zur Parallelisierung und Miniaturisierung erfüllen zu können, ist es wünschenswert eine Vielzahl von Sensorfeldern auf einem Substrat bereitzustellen.

Die einzelnen Sensorfelder sollten durch lichtabsorbierende Bereiche voneinander getrennt werden, wobei diese Trennung z.B. durch absorbierende Lacke realisiert werden kann. Sinn dieser lichtabsorbierenden Bereiche ist es, einen Kontrast zu erzeugen, der es bei der Abbildung der Sensoranordnung auf einen ortsauflösenden Detektor erlaubt, die Bildbereiche den Sensorfeldern zuordnen zu können.

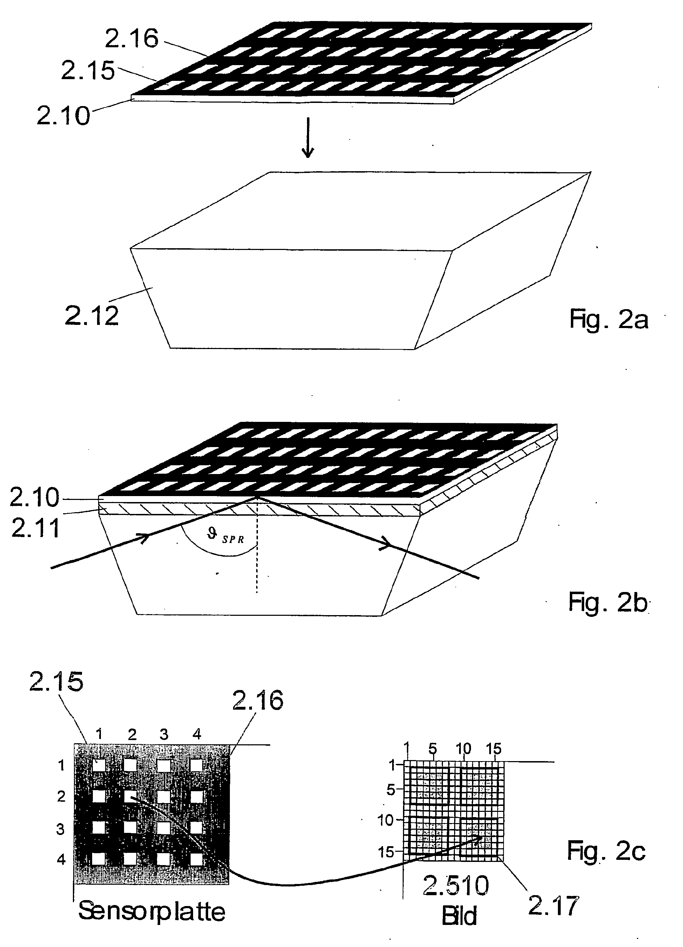

Ein solches Substrat 2.10 mit Sensorfeldern 2.15 und Trennmitteln 2.16 ist in Fig. 2a gezeigt. Dieses Substrat 2.10 wird dann mittels einer Indexanpassungsschicht 2.11 (z.B. Indexanpassungsöl) auf ein Prisma 2.12 gesetzt. Über das Prisma 2.12 kann dann Strahlung eingekoppelt werden, die im geeigneten Winkelbereich auf die Sensorfelder auftreffen kann, sowie die reflektierte Strahlung wieder ausgekoppelt werden (siehe Fig. 2b). Dem Prisma 2.12 ist eine Abbildungsoptik (nicht abgebildet) nachgeordnet, welche die reflektierte Strahlung auf einen geeigneten Sensor, z.B. einen CCD-Chip wirft. Dies ist schematisch in Fig. 2c gezeigt, wo die Zuordnung zwischen den Sensorflächen 2.15 und entsprechenden Pixelbereichen 2.17 auf dem CCD-Sensor 2.510 abgebildet ist.

WO-A-01/63256 offenbart solche lichtabsorbierenden Bereiche als Trennmittel, wobei als geeignete Materialien absorbierende Metall- oder Halbleiterschichten oder Polymere (z.B. Photolack, Silizium) vorgeschlagen werden. Hierbei sollen die Trennmittel eine Dicke von 10 bis 5000 μm aufweisen.

Die Erhöhung der Dichte der Sensorfelder führt dazu, dass die Fläche der Sensorfelder kleiner wird. Bei dem Versuch, kompakte Sensoranordnungen mit Photolack als Trennmittel herzustellen, zeigten sich die folgenden Schwierigkeiten:

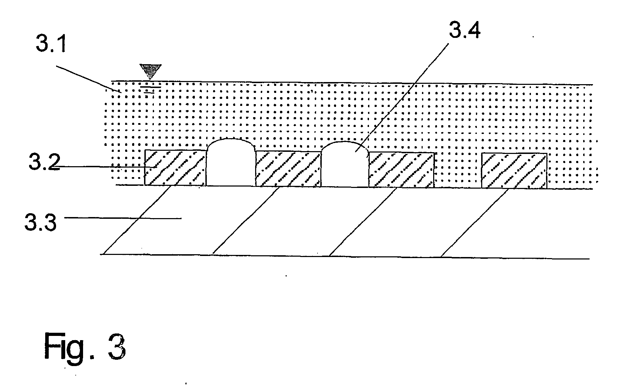

- Die geometrische Dicke des Lackes von einigen μm erzeugt eine Kante, die aufgrund der Oberflächenspannung der Messlösung Gasbläschen an diesen Kanten hervorruft. Offenbar stellt das Aspektverhältnis Schichtdicke:Durchmesser dabei eine Rolle, da dieser Effekt bei größeren Feldern nicht beobachtet wurde. Auch der Zusatz von Benetzungsverbesseren schafft hier keine zuverlässige Abhilfe. Dies ist in Fig. 3 gezeigt. Hier ist schematisch der Querschnitt durch eine Sensoranordnung gezeigt, wobei 3.3 das Substrat bezeichnet, 3.2 die Photolackschicht, die als Trennmittel eingesetzt wird, und 3.1 die Messlösung. In den freien Bereichen zwischen den Trennmitteln 3.2 befinden sich die Sensorfelder. In einigen dieser Bereiche sind Gasbläschen 3.4 gefangen.

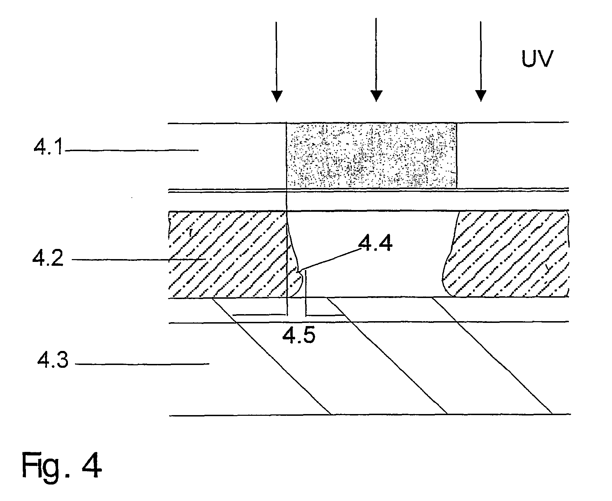

- Bei der Strukturierung von dicken Schichten (dick bedeutet hier die Größenordnung 10μm oder etwas darüber) vermindert sich die Kantenqualität, d.h. wird der Lack häufig unterwandert, wie in Fig. 4 gezeigt. 4.1 bezeichnet hierbei eine Photomaske für die Strukturierung eines Lacks 4.2 auf einem Substrat 4.3. Die unterwanderten Bereiche 4.5, die sich unter Vorständen 4.4 befinden, werden später bei der Goldbedampfung nicht mit Metall beschichtet und führen bei der späteren Messung in der SPR-Meßapparatur zur Totalreflexion, und verschlechtern somit das SPR-Signal.

Die Verwendung von dünneren Lackschichten ist nicht möglich, da dann kein ausreichender Kontrast zwischen den Sensorfeldern und den Trennbereichen geschaffen wird.

Aus US-6,335,142 B1 ist eine lichtabsorbierende Beschichtung bekannt, welche mindestens eine dünne, optisch diskontinuierliche Metallschicht enthält, welche in einem bestimmten Spektralbereich absorbierend ist, sowie mindestens eine dielektrische Schicht, die auf der dünnen Schicht vorgesehen ist und in diesem Spektralbereich durchlässig ist. Die Beschichtung ist vorgesehen für optische Systeme im Weltraum, die Telemetrie, LCD-Flachanzeigen und Mikrotip-Anzeigen, sowie HDTV.

EP 1 286 187 A2 offenbart eine Optikvorrichtung zum Filtern von elektromagnetischer Strahlung und zum Erfassen von angelagerten chemischen Verbindungen. Ein Substrat mit Reliefstruktur ist vorgesehen, mit einem dielektrischen Körper, der Abmessungen hat, die kleiner sind als die Wellenlänge der gefilterten elektromagnetischen Strahlung. Diese Strukturen sind zweidimensional als Arrays angeordnet.

Der vorliegenden Erfindung liegt die Aufgabe zugrunde, eine funktionsfähige SPR-Sensoranordnung der oben beschriebenen Art bereitzustellen, deren Sensorfelder durch Trennmittel abgegrenzt sind, die in wesentlich geringerer Dicke gegenüber den im Stand der Technik bekannten Trennmitteln gebildet werden können.

Diese Aufgabe wird durch die Merkmale des Patentanspruchs 1 bzw. die Gegenstände der nebengeordneten Ansprüche gelöst. Vorteilhafte Ausgestaltungen sind Gegenstand der abhängigen Ansprüche.

Erfindungsgemäß ist eine die Trennbereiche bildende Trennmittelschicht mit einer Dicke von höchsten 1 μm zumindest in einem ersten Bereich, der an die Grenzfläche zwischen der Trennmittelschicht und dem Substrat grenzt, so ausgebildet, dass an der Grenzfläche zwischen der Trennmittelschicht und dem Substrat eine Reflektivität kleiner 0,5 bewirkt wird. Ferner ist die Trennmittelschicht zumindest in einem zweiten Bereich, der über dem ersten Bereich auf der dem Substrat abgewandten Seite liegt, so ausgebildet, dass eine Extinktion größer 0,95 bewirkt wird.

Die beiden Bereiche können Teil einer einheitlichen Schicht sein, oder durch zwei verschiedene, übereinander vorgesehene Schichten bereitgestellt werden.

Durch das Schaffen einer Reflektivität von kleiner 0,5 an der Grenzfläche und gleichzeitig die Erzielung einer Extinktion von größer 0,95 in dem Bereich darüber, kann ein ausreichender Kontrast zwischen den Trennmitteln und den SPR-Sensorflächen geschaffen werden, selbst bei geringer Schichtdicke. Durch die erfindungsgemäße Ausbildung der Trennmittelschicht mit den zwei genannten Bereichen ist es insbesondere möglich die Dicke der Trennmittelschicht so zu verkleinern, dass die oben genannten Probleme nicht auftreten. Damit ist es wiederum möglich Sensoranordnungen zu schaffen, welche eine große Dichte an Sensorfeldern haben, z.B. größer als 250 Felder pro cm$^2$.

Durch die Sensoranordnungen mit hoher Sensorfelddichte können effiziente Hochdurchsatzmessungen mit Sensorplatten, die beispielsweise etwa 10000 Felder tragen, durchgeführt werden, deren Gesamtfläche weniger als 20 cm$^2$ beträgt, im Gegensatz zu herkömmlichen Sensorplatten, die bei gleicher Feldanzahl um ein bis zwei Größenordnungen größer sind. Durch die großen Flächenabmessungen bei herkömmlichen Sensorplatten sind die zugehörigen optischen Messanordnungen (d.h. Linsensysteme) sehr groß, d.h. es sind Linsen mit Durchmessern größer 15 cm notwendig, sowie entsprechend große Linsenabstände von bis zu mehreren Metern. Damit sind die herkömmlichen Messanordnungen sehr teuer, da die optischen Komponenten speziell angefertigt werden müssen, und sehr unpraktisch, da die Anordnungen ganze Räume einnehmen.

Demgegenüber ist es mit den Sensoranordnungen mit hoher Sensorfelddichte möglich, eine kompakte optische Messanordnung einzusetzen, welche aus handelsüblichen Optikkomponenten aufgebaut sein kann, und welche bequem auf einem Labortisch Platz findet.

Ein weiterer Vorteil der hohen Felddichte liegt im reduzierten Bedarf an in Lösung befindlichen Zielmolekül, wie Protein. Gerade die Menge an verfügbarem Protein stellt häufig eine kritische Größe dar.

Die vorliegende Erfindung wird nun anhand von bevorzugten Ausführungsformen beschrieben, wobei auf die Figuren Bezug genommen wird, in welchen:

Fig. 1    schematisch eine SPR-Messanordnung und charakteristische Resonanzkurven zeigt;

Fig. 2    eine Sensorplatte mit Sensorfeldern und Trennbereichen zeigt;

Fig. 3    die Problematik der Gasblasenbildung bei herkömmlichen Sensoranordnungen veranschaulicht;

Fig. 4    die Problematik der Unterätzung bei herkömmlichen Sensoranordnungen veranschaulicht;

Fig. 5    graphisch den Zusammenhang zwischen Brechungsindex, Extinktionskoeffizient und Reflektivität veranschaulicht;

Fig. 6    schematisch ein Verfahren zur Herstellung einer Sensoranordnung zeigt;

Fig. 7    Reflektivitätsmessungen an erfindungsgemäßen Sensoranordnungen zeigt;

Fig. 8    SPR-Messungen an erfindungsgemäßen Sensoranordnungen zeigt;

Fig. 9    Reflektivitätsspektren für Siliziumschichten zeigt;

Fig. 10    Reflektivitätsspektren für Titan und Zweischichtsysteme aus Titan und Silizium zeigt;

Fig. 11    schematisch den Querschnitt durch eine Anordnung von Übertragungsstiften zeigt, welche dafür vorgesehen sind Flüssigkeitsproben auf die Sensorfelder einer Sensoranordnung aufzubringen;

Fig. 12    schematisch die Übertragung von Flüssigkeitsproben auf Sensorfelder zeigt;

Fig. 13a    eine Perspektivansicht einer Sensoranordnung zeigt; und

Fig. 13b und 13c    schematische Querschnittsansichten von Ausführungen der Trennmittelschicht nach der vorliegenden Erfindung.

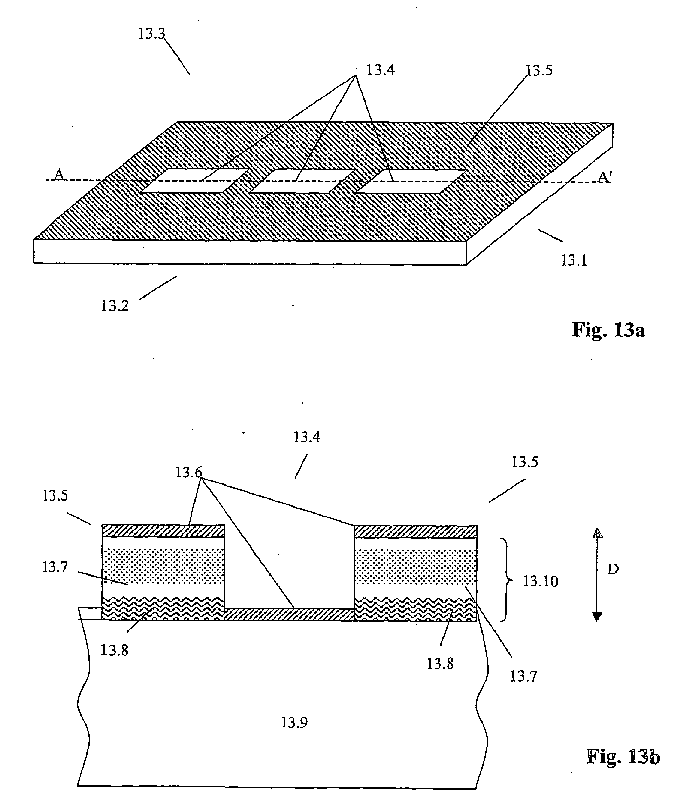

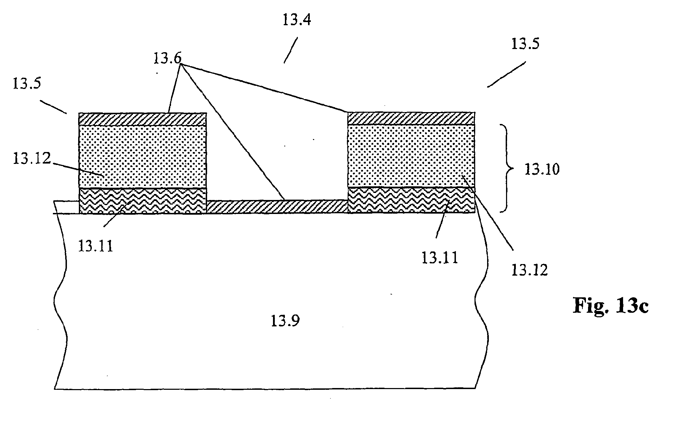

Nun wird anhand der Figur 13 eine SPR-Anordnung als Ausführung der vorliegenden Erfindung beschrieben. Die Sensoranordnung 13.1 umfasst ein strahlungsleitendes Substrat 13.9, das eine erste und eine zweite Oberfläche aufweist. Die erste Oberfläche 13.2 ist eine Strahlungsdurchtrittsfläche, durch welche Strahlung eines vorgegebenen Wellenlängenbereichs in das Substrat 13.9 eingekoppelt bzw. aus dem Substrat 13.9 ausgekoppelt werden kann. Diese Strahlungsdurchtrittsfläche wird typischerweise mittels einer Indexanpassungsschicht mit einem Prisma verbunden, wie in Fig. 2 gezeigt, sofern das Prisma nicht selbst das Substrat darstellt. Durch das Prisma wird Strahlung zum Substrat 13.9 geführt bzw. von ihm weggeführt.

Im Beispiel der Fig. 13 ist die Sensoranordnung als flaches Plättchen ausgeführt, was zwar bevorzugt ist, aber nicht zwingend.

Für SPR-Messungen an Goldoberflächen kann der interessierende Wellenlängenbereich im langwelligen Bereich des sichtbaren Spektrums bis hin in das Nah-Infrarot liegen, beispielsweise zwischen 500 und 1500 nm liegen.

Auf der zweiten Oberfläche 13.3 ist eine Vielzahl von Sensorfeldern 13.4 vorgesehen, welche ausgebildet sind, um aus dem Substrat 13.9 kommende Strahlung des vorgegebenen Wellenlängenbereichs, die in einem vorbestimmten Winkelbereich einfällt, zu reflektieren. Diese Sensorfelder sind z.B. mit Gold (siehe 13.6 in Fig. 13b) oder einem anderen SPR-geeigneten Material beschichtete Bereiche, in welchen Oberflächenplasmonen angeregt werden können. Für SPR-Messungen auf Goldoberflächen kann der interessierende Winkelbereich zwischen 55 und 80 Grad liegen.

Für RIfS dient eine chemisch modifizierte Glasoberfläche als Sensorfeld, der Winkel für die Reflexion ist hier deutlich kleiner als bei SPR.

Auf der zweiten Oberfläche 13.3 sind ferner Trennbereiche 13.5 zur Trennung der einzelnen Sensorfelder 13.4 von den jeweils benachbarten Sensorfeldern 13.4 vorgesehen. Die Trennbereiche 13.5 sind ausgebildet aus dem Substrat 13.9 kommende Strahlung des vorgegebenen Wellenlängenbereichs, die in dem vorbestimmten Winkelbereich einfällt, zu absorbieren, um in der an den Sensorfeldern 13.4 reflektierten Strahlung einen Kontrast zwischen den Sensorfeldern 13.4 und den Trennbereichen 13.5 zu erzeugen.

Die Trennbereiche 13.5 sind durch eine Trennmittelschicht 13.10 (siehe Fig. 13b) auf der zweiten Oberfläche 13.3 des Substrats 13.9 gebildet. Dabei bewirkt die Trennmittelschicht 13.10 zumindest in einem ersten Bereich 13.8, der an die Grenzfläche zwischen der Trennmittelschicht 13.10 und dem Substrat 13.9 grenzt, für aus dem Substrat kommende Strahlung des vorgegebenen Wellenlängenbereichs, die in dem vorbestimmten Winkelbereich einfällt, an der Grenzfläche zwischen der Trennmittelschicht 13.10 und dem Substrat 13.9 eine Reflektivität kleiner 0,5, vorzugsweise kleiner 0,25.

Gleichzeitig bewirkt die Trennmittelschicht 13.10 zumindest in einem zweiten Bereich 13.7, der über dem ersten Bereich 13.8 auf der dem Substrat 13.9 abgewandten Seite liegt, für Strahlung des vorgegebenen Wellenlängenbereichs eine Extinktion von größer 0,95.

Durch die Reflektivität von kleiner 0,5 wird bewirkt, dass an den Trennbereichen höchstens 50% der einfallenden Strahlung reflektiert wird, während an den Sensorfeldern (außerhalb der SPR-Resonanz) eine Reflektivität von annähernd 1 herrscht. Durch die Extinktion zumindest im zweiten Bereich, vorzugsweise in der gesamten Schicht 13.10, wird verhindert, dass nennenswerte Strahlungsmengen durch die Schicht 13.10 transportiert werden, an der Oberseite der Schicht reflektiert werden, und dann nach dem erneuten Durchlaufen der Schicht wieder in das Substrat 13.9 gebrochen werden. Somit wird insgesamt gewährleistet, dass ein guter Kontrast zwischen den Trennbereichen und den Sensorfeldern geschaffen wird.

Der erste und der zweite Bereich 13.7, 13.8 können zu einer einheitlichen Schicht 13.10 gehören. In diesem Fall besteht die Schicht 13.10 aus einem Material, das sowohl die geforderte Reflektivität als auch die geforderte Extinktion erzielen kann. Die Reflektivität hängt im wesentlichen von den Brechungsindices der sich an der Grenzfläche begegnenden Materialien, die Extinktion vom Extinktionskoeffizienten des Materials der Trennmittelschicht ab. Dabei ist aber zu beachten, dass der Extinktionskoeffizient der Imaginärteil des komplexen Brechungsindex des Trennmittelmaterials ist, also auch bei der Reflektivität eingeht.

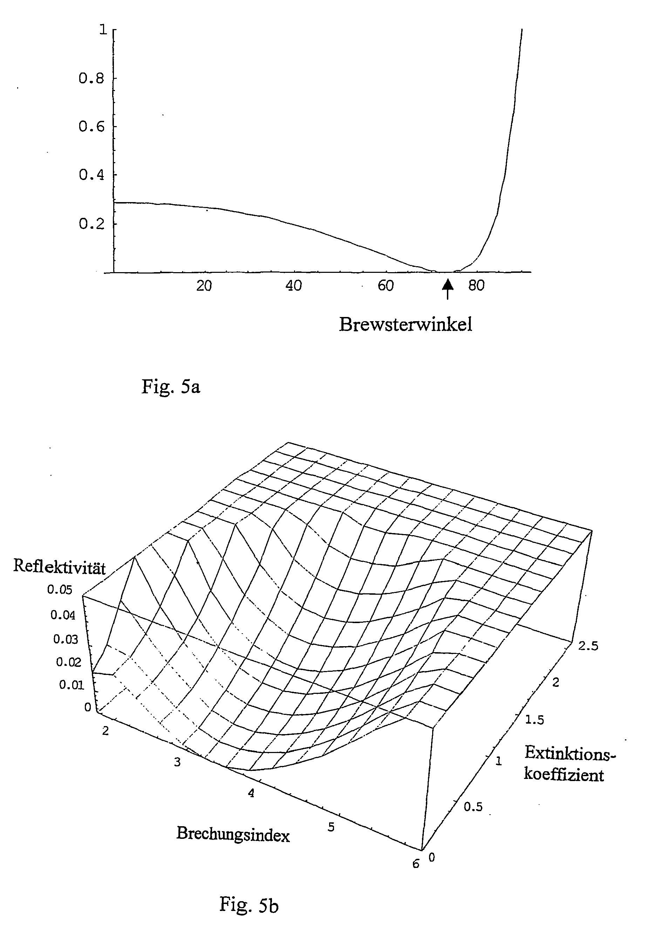

Zunächst betrachte man die Einstellung der Reflexion: Bei der Reflexion von Licht an der Grenzfläche zwischen zwei Medien unterschiedlichen Brechungsindices ($n_0$: Brechungsindex auf der einfallenden Seite, also das Substrat 13.9, $n_1$: Brechungsindex des Mediums in dem das Licht gebrochen wird, also die Trennmittelschicht 13.10) gibt es für p-polarisiertes Licht den sogenannten Brewsterwinkel, bei dem das Licht vollständig in das Medium eindringt, die Reflexion also verschwindet (siehe Fig. 5a).

Formelmäßig ist der Brewsterwinkel folgendermaßen aus den Werten der Brechungsindices berechenbar:

$$\tan(\theta_B) = n_1 / n_0 \, .$$

Bei SPR-Messungen verwendet man p-Polarisiertes Licht. Sieht man den SPR-Winkel $\theta_{SPR}$ aus den restlichen experimentellen Bedingungen gegeben an, und gibt man den Brechungsindex des Substrates $n_0$ vor, so ist der Brechungsindex der Trennmittelschicht $n_1$ optimal zu wählen als

$$n_1 = n_0 \tan(\theta_{SPR})$$

Dann dringt also sämtliches Licht in die Trennmittelschicht ein.

Allerdings ist die Physik an der Grenzfläche zwischen zwei Medien, bei denen eines der Medien absorptive Eigenschaften hat, d.h. einen nicht verschwindenden Extinktionskoeffizienten, auf die obige Weise nicht korrekt beschrieben.

Korrekterweise muss die Fresnelsche Formel für die Reflexion von p-polarisiertem Licht herangezogen werden. Demnach beträgt das Amplitudenverhältnis von reflektiertem Licht zu einfallendem Licht:

$$r = \frac{\tan(\theta_0 - \theta_1)}{\tan(\theta_0 + \theta_1)}$$

und daraus ergibt sich der Reflexionskoeffizient:

$$R = rr^*$$

Wobei $\theta_0$ der Einfallswinkel und $\theta_1$ der Winkel des gebrochenen Strahls ist. Der Einfallswinkel ist der SPR-Winkel und der Winkel des gebrochen Strahls ergibt sich aus dem Brechungsgesetz.

$$n_0 \sin(\theta_0) = n_1 \sin(\theta_1)$$

Bei einem Material mit Extinktion (z.B. Metallen) ist dann $n_1$ komplex, d.h.

$$n_1 = n_{1r} - i\kappa$$

wobei $n_{1r}$ der reelle Brechungsindex ist, und $\kappa$ der Extinktionskoeffizient. Aus dem Brechungsgesetz folgt, dass der berechnete Winkel $\theta_1$ ebenfalls komplex sein muss. Trägt man nun den Reflexionskoeffizienten R, z.B. bei festem Einfallswinkel $\theta_0 = \theta_{SPR} \sim 66°$ und vorgegebenem Brechungsindex des Substrates (hier: $n_1 \sim 1,5$) gegen Realteil und Imaginärteil des Brechungsindex auf, so erhält man Fig. 5b.

Aufgetragen ist in diesem Plot der Reflexionskoeffizient R (von 0 bis 5%) gegen den Realteil des Brechungsindex (von 2 bis 6) und den Extinktionskoeffizient $\kappa$ (von 0 bis 2,5). Man erkennt: um die Reflektivität zu verringern sollte der Realteil des Brechungsindex zwischen 2 und 6 liegen, und der Extinktionskoeffizient sollte kleiner als 2 sein. Man erkennt also, dass der Extinktionskoeffizient nicht zu groß werden darf, da damit zwar die Extinktion vergrößert wird, aber die Reflektivität sich auch erhöht.

Eine Untergrenze für den Extinktionskoeffizienten $\kappa$ ergibt sich aus der Überlegung, dass eine Schichtdicke von $1\mu m$ ausreichen sollte, um 95 % des Lichtes zu absorbieren, was wünschenswert ist um zu gewährleisten, dass die Reflexionsspektren der Sensorfelder nicht wesentlich von denen der Trennmittel bei der Bindungsmessung beeinträchtigt wird. Die bevorzugte Untergrenze ist dann 0.1.

Es ist aus Gründen der leichteren Herstellung wünschenswert, dass das einheitliche Material der Schicht 13.10 ein aufdampfbares Material ist. Vorzugsweise ist es Titan oder Germanium, welche für Substratmateriälien mit Brechungsindex zwischen 1.3 und 1.8, einem Winkelbereich zwischen 55° und 80°, sowie einem Wellenlängenbereich zwischen 500 und 900 nm die gewünschte Reflexion und Extinktion für die gewünschte Polarisationsrichtung aufweisen, wenn eine Schichtdik-

ke von D=200 nm für die Schicht 13.10 gewählt wird.

Im Zusammenhang mit Titan sei bemerkt, dass dieses Material im Bereich der SPR-Technik als haftungsvermittelndes Material zwischen Gold und Glassubstraten bekannt ist. Allerdings wird es dabei in sehr dünnen Schichten von nur wenigen nm aufgebracht, und gerade deswegen verwendet, weil es keine merkliche Dämpfung der Strahlung bewirkt, von der gewünscht wird, dass sie möglichst vollständig die Goldschicht erreicht, um dort Plasmonen anzuregen. Dies ist im vollkommenen Gegensatz zum Prinzip der vorliegenden Erfindung, ein Material für die Trennmittelschicht zu verwenden, das eine starke Dämpfung bewirkt.

Alternativ zur Verwirklichung der zwei Bereiche in einer Einschichtstruktur, kann die Erfindung auch in einer Mehrschichtstruktur ausgeführt werden. Dabei gehört der erste Bereich 13.8 zu einer ersten, von der Trennmittelschicht 13.10 umfassten Schicht 13.11 (siehe Fig. 13c), und der zweite Bereich 13.7 zu einer zweiten, von der Trennmittelschicht 13.10 umfassten und von der ersten Schicht 13.11 verschiedenen Schicht 13.12. In der in Fig. 13c gezeigten Ausführung dient die Schicht 13.11 dazu, die Reflektivität unter 0.5 zu bringen, und die Schicht 13.12 dient dazu, die gewünschte Extinktion zu bewirken. Es sei angemerkt, dass sich zwischen den Schichten 13.11 und 13.12, sowie über der Schicht 13.12 noch weitere Schichten befinden können, was aber der Einfachheit nicht gezeigt ist.

Die erste Schicht 13.11 umfasst vorzugsweise Silizium oder Germanium, welche bei einem für das Substrat zwischen 1.2 und 1.8 liegenden Brechungsindex beide eine niedrige Reflektivität aufweisen. Die zweite Schicht 13.12 umfasst vorzugsweise Germanium, oder ein Metall, wiederum vorzugsweise Titan oder Chrom.

Der erste und zweite Bereich 13.8, 13.7, welche die gleiche Dicke wie die erste bzw. zweite Schicht 13.11, 13.12 haben können, oder eine kleinere, weisen vorzugsweise jeweils eine Dicke von höchstens 1 $\mu m$ auf. Dadurch kann die Trennmittelschicht 13.10 eine Dicke D von 2 $\mu m$ oder mehr haben. Bevorzugt wird, dass die Trennmittelschicht 13.10 eine Dicke D von höchstens 1 $\mu m$ aufweist.

Es wird ferner bevorzugt, dass der zweite Bereich 13.7 eine Dicke von mehr als 70 nm, vorzugsweise von mehr als 200 nm aufweist. Der erste Bereich 13.8 soll eine Dicke von mehr als 10 nm, vorzugsweise von mehr als 20 nm aufweisen. Der erste und zweite Bereich zusammen sollen eine Dicke von mindestens 80 nm aufweisen, vorzugsweise von mindestens 100 nm und besonders bevorzugt von mindestens 200 nm.

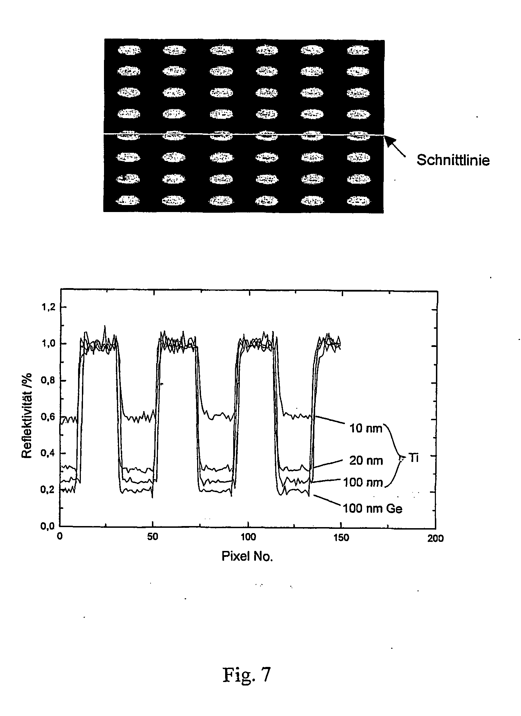

Durch die vorliegende Erfindung ist es möglich, Trennmittelschichtdicken D von höchstens 2 $\mu m$, insbesondere kleiner 1 $\mu m$ herzustellen. Damit kann wiederum eine Verkleinerung der Sensorfeldabmessungen verwirklicht werden, ohne die eingangs genannten Probleme der Blasenbildung oder Unterätzung. Die Form der Sensorfelder kann dabei beliebig gewählt werden, z.B. rechteckig (wie in Fig. 13 angedeutet) oder rund (wie in Fig. 7 gezeigt). Sensorfelder mit einem Durchmesser bzw. einer Diagonalen von 100 μm oder weniger sind realisierbar. Die Sensorfelder haben bevorzugt jeweils eine Flächenausdehnung von kleiner oder gleich 6.2 x $10^{-4}$ cm$^2$.

Die Flächendichte der Sensorfelder kann gegenüber dem Stand der Technik deutlich erhöht werden und beträgt vorzugsweise 250 Felder pro cm$^2$ oder mehr. Durch die Möglichkeit, kleine Sensorfeldflächen und hohe Flächendichten bereitzustellen, kann eine erfindungsgemäß ausgestaltete Sensoranordnung bei etwa 10000 Sensorfeldern eine Gesamtfläche von kleiner oder gleich 20 cm$^2$ haben.

Dadurch ist es wiederum möglich eine gegenüber bisherigen Messanordnungen stark verkleinerte Messanordnung zu schaffen, welche zudem mit handelsüblichen optischen Elementen ausgestattet werden kann, d.h. keine Sonderanfertigungen erfordert. Eine solche optische Messanordnung kann dann eine Fläche von 1- 2 m$^2$ und eine Höhe von ungefähr 1 m haben, um bequem auf einem Labortisch oder dergleichen Platz zu finden. Die grundsätzliche Messanordnung kann dann wie in Fig. 2 aufgebaut sein, d.h. neben der Sensoranordnung 2.10 ist ein optisches Mittel, z.B. die Indexanpassungsschicht 2.11 und das Prisma 2.12 vorgesehen, zum Einkoppeln von Strahlung des interessierenden Wellenlängenbereichs in das Substrat der Sensoranordnung durch die erste Oberfläche, mit einem Winkel innerhalb des interessierenden Winkelbereichs, und zum Auskoppeln der von den Sensorfeldern reflektierten Strahlung. Ferner ist eine Strahlungsquelle (nicht abgebildet) vorzusehen, um dem optischen Mittel Strahlung des vorgegebenen Wellenlängenbereichs zuzuführen, sowie ein Detektor (siehe Fig. 2c), der angeordnet ist, um die aus dem optischen Mittel ausgekoppelte und von den Sensorfeldern reflektierte Strahlung zu erfassen.

Sensoranordnungen nach der vorliegenden Erfindung können auf jede geeignete oder gewünschte Art hergestellt werden. Vorzugsweise geschieht die Aufbringung der Trennmittelschicht durch Aufdampfen, da sich damit dünne Schichten kleiner 1 μm in guter Qualität herstellen lassen.

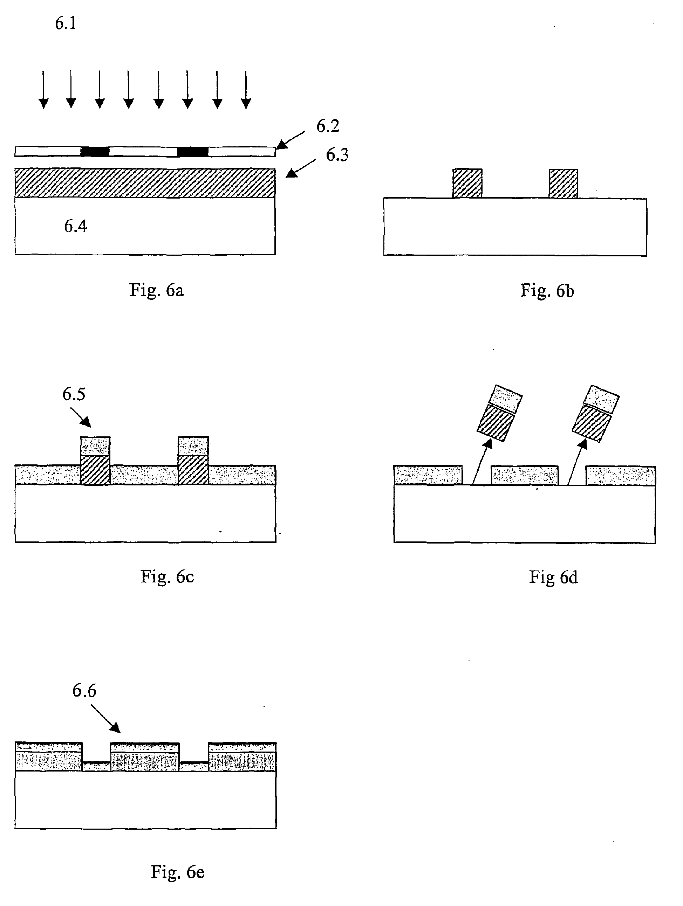

Fig. 6 zeigt schematisch ein Verfahren der Herstellung. Zunächst wird eine strukturierbare Lackschicht 6.3 auf dem Substrat 6.4 aufgebracht. Dann wird die Lackschicht 6.3 mittels Belichtung durch eine geeignete Maske 6.2 strukturiert, um die freien Bereiche zu definieren (Fig. 6a). Danach wird der Lack entfernt, so dass nur an den Stellen der freien Bereiche Lack verbleibt, wie in Fig. 6b gezeigt. Danach werden ein oder mehr erste Materialien 6.5 zur Bildung des ersten Bereichs (13.8 in Fig. 13) und anschließend eines oder mehr zweiter Materialien zur Bildung des zweiten Bereichs (13.7 in Fig. 13) aufgedampft, siehe Fig. 6c. In Fig. 6d ist die Durchführung eines Lift-Off gezeigt, um den an den freien Bereichen befindlichen und beschichteten Lack abzuheben, so dass an den freien Bereichen das Substrat freigelegt wird. Schließlich erfolgt der Schritt des Aufbringens einer SPR-geeigneten Schicht 6.6, z.B. aus Gold, zumindest in den freien Bereichen, um die Sensorfelder zu bilden. Vorzugsweise wird auch die Trennmittelschicht mit der SPR-fähigen Schicht versehen, da dies den Herstellungsablauf vereinfacht und damit gleichzeitig ein Schutz für die Trennmittelschicht geschaffen wird.
Als Alternative zu dem beschriebenen Verfahren können die in Fig. 6a und 6b gezeigten Schritte auch durch das Aufbringen einer strukturierten Lackschicht mittels Siebdrucktechnik ersetzt werden, wobei die nachfolgenden Schritte 6c-6e die gleichen bleiben.

Anstatt der bisher beschriebenen Verfahren kann zur Strukturierung auch ein Ätzverfahren eingesetzt werden. Dieses umfasst das Aufdampfen des Trennmittelmaterials homogen über dem ganzen Substrat. Anschließend werden mittels strukturierbarem Lack die späteren Trennbereiche geschützt. Dies kann beispielsweise lithographisch oder durch Siebdruck erfolgen. Danach erfolgt das Freilegen der Sensorfelder durch selektives Ätzen und Ablösen des Schutzlacks.

Fig. 7 zeigt Reflektivitätsmessungen für eine Ausführung der Erfindung, bei welcher die Trennmittelschicht durch eine einheitliche Schicht aus Titan oder Germanium gebildet war. Die obere Hälfte zeigt eine Abbildung des Bildes im Detektor (siehe Fig. 2c), wobei die hellen Felder den Sensorfeldern entsprechen, und der schwarze Bereich der Trennmittelschicht. Die mit Gold beschichteten Sensorfelder hatten einen Durchmesser von 110 μm. Die tatsächlich runden Felder erscheinen in der Abbildung oval, was auf eine Verkippung in der Abbildungsoptik zurückzuführen ist. Der Graph in der unteren Hälfte von Fig. 7 zeigt die Reflektivität entlang der angegebenen Schnittlinie, außerhalb der SPR-Resonanz. Aufgetragen sind Messungen für drei verschiedene Titan Schichtdicken: 10 nm, 20 nm und 100 nm sowie für Germanium in der Dicke 100 nm. Man erkennt, dass eine Trennmittelschichtdicke von 100 nm die geringste Reflektivität bewirkt (ca. 20%), so dass dies eine bevorzugte Schichtdicke ist, und dass Germanium einen etwas besseren Kontrast liefert als Titan.

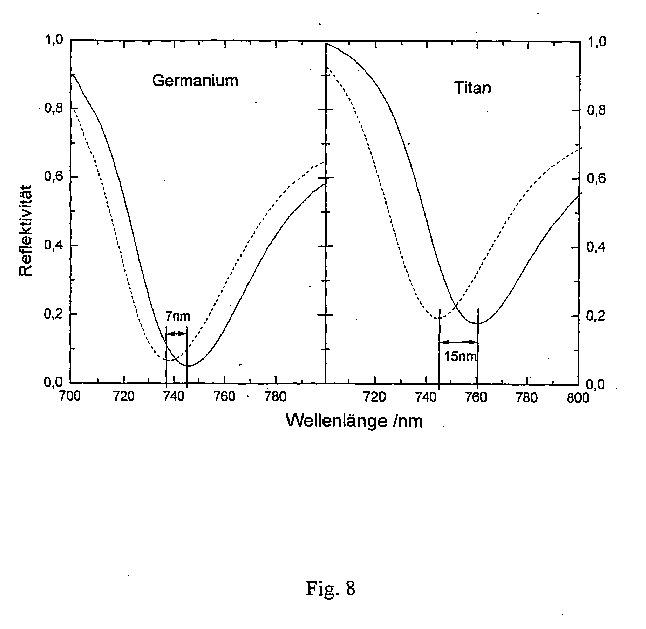

Figur 8 zeigt das Ergebnis konkreter SPR-Messungen an den in Zusammenhang mit Fig. 7 beschriebenen Ausführungen der Erfindung. Gezeigt sind die Ergebnisse von Bindungsexperimenten mit Biosensoren bei denen Biotin auf den Sensorfeldern immobilisiert wurde. Die gestrichelten Resonanzkurven sind in Benetzung mit einem Referenzpuffer entstanden. Die ausgezogenen Kurven sind nach der Inkubation mit Avidin, einem bekannten Rezeptor von Biotin, aufgenommen worden. Die Verschiebung der Resonanzkurven nimmt linear mit der Menge von gebundenen Avidin zu. Überraschenderweise wurde bei den Sensoren mit Titan als absorbierende Schicht ein deutlich höheres Signal gemessen als bei den Sensoren mit Germanium, obwohl der Kontrast mit Germanium besser war (vgl. Fig. 7). Dies ist vermutlich auf eine höhere Biokompatibilität des Titans zurückzuführen.

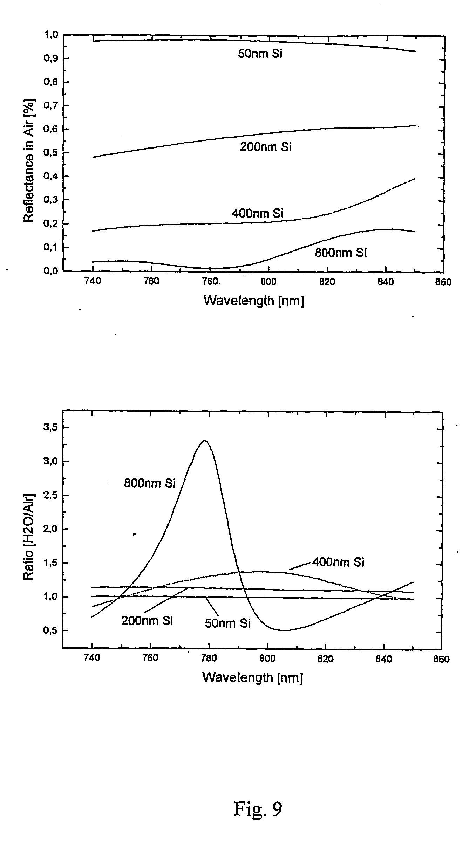

Fig. 9 zeigt Reflexionsstärkemessungen für Sensoranordnungen, bei welchen die Trennmittelschicht aus Silizium bestand. Der obere Graph zeigt Ergebnisse gegenüber Luft, d.h. auf der Oberfläche der Sensoranordnung befand sich Luft. Es wurden Sensoren mit 50, 200 und 400 und 800nm Trennmittelschichtdicke hergestellt, und deren Reflexionsspektrum in der SPR-Apparatur zwischen 750 und 850nm vermessen. Es wurden auch Messungen gegenüber Wasser gemacht, d.h. auf der Oberfläche der Sensoranordnung befand sich Wasser, und der untere Graph zeigt das Verhältnis der gemessenen Reflexionsstärken. Man erkennt, dass bei 800nm Si zwar die Reflexion gegenüber Luft unter 10% fällt, aber dann das Verhältnis von Reflexion in Wasser gegenüber der Reflexion in Luft signifikant variiert. Das bedeutet, dass ein Teil des Lichtes durch die gesamte Si-Schicht hindurchdringt und von dort zurückreflektiert wird, aufgrund des geringen Extinktionskoeffizienten von Si. Damit erfüllt Si nicht die Voraussetzungen der vorliegenden Erfindung für Trennmittelschichtdicken kleiner 1 μm.

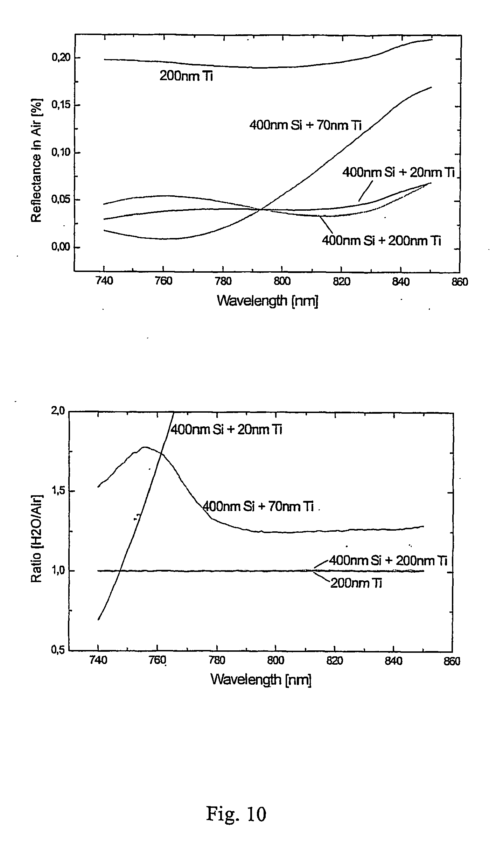

Erfindungsgemäß lässt sich jedoch Si in einer Zweischichtstruktur verwenden, bei welcher Si aufgrund seiner geringen Reflektivität als erste Schicht 13.11 verwendet wird (siehe Fig. 13), und ein Material mit geringer Transmission, z.B. Titan als zweite Schicht 13.12 verwendet wird. Man kombiniert also Si und Titan, um sowohl geringe Reflektivität (Si) als auch geringe Transmission (Ti) zu bekommen. Fig. 10 zeigt Reflexionsstärkemessungen für verschiedene Si/Ti-Kombinationen, wobei der obere Graph ähnlich wie in Fig. 9 die Reflexionsstärke gegenüber Luft zeigt, und der untere Graph das Verhältnis zwischen der Reflexionsstärke gegenüber Wasser und gegenüber Luft.

Bei einer gut realisierbaren Schichtdicke für Si von 400nm wurden zusätzlich unterschiedliche Dicken von Ti (20, 70, 200nm) aufgedampft. Zum Vergleich ist auch 200nm Ti alleine eingezeichnet, wobei damit etwa 20% Reflektivität erreicht wird. Man sieht, dass bei der Kombination Si=400nm und Ti=200nm die Reflexion unter 10% fällt, und gleichzeitig das Verhältnis Reflexion in Wasser zur Reflexion in Luft sich nicht ändert.

Es ist daher bevorzugt, dass in einer Zweischichtstruktur die Kombination Si=400nm und Ti=200nm gewählt wird, um ein gut realisierbares Schichtsystem zu erhalten, welches im übrigen besonders biokompatibel ist, da Ti eine gute Biokompatibilität hat.

Überraschenderweise zeigte sich bei dünnen Schichten, dass das Verhältnis der Reflektivität der Trennmittelschicht gegenüber Luft und gegenüber Wasser wichtig ist, da dieses Verhältnis als Überlagerung bei der Datenaufnahme der SPR-Spektren beobachtet wird. Variiert dieses Verhältnis über die Wellenlänge, wie z.B. in Fig. 9 für 800 nm Si, so wird später im SPR Spektrum ein "buckelartiger" Spektralverlauf überlagert, was zu Artefakten bei der Auswertung der SPR Verschiebungen führt.

Eine weitere Schwierigkeit bei der Miniaturisierung von Sensoranordnungen, neben der Eingangs erwähnten Blasenbildung und der Unterätzung, ist das präzise Aufbringen der zu messenden Proben auf die Sensorfelder, was auch als Spotting bezeichnet wird. Bekannt ist das Absetzen kleiner Tröpfchen mittels Stahlnadeln auf Glas-Objektträger bei sogenannten DNA-Chips.

Bei den erfindungsgemäßen Sensoranordnungen mit Sensorfeldabmessungen kleiner 100 μm ist aber eine Positionierungsgenauigkeit von besser 10% anzustreben, also kleiner 10μm. Dies ist bei dem bekannten Spotting von DNA-Chips nicht möglich.

Gegenüber dem Spotting von DNA-Chips ist weiterhin zu beachten, dass zum Spotting von chemischen Mikroarrays die Eintauchnadeln, z.B. Stahlnadeln eine Verweildauer von einigen Sekunden auf dem Sensorfeld benötigen, damit die Reagenzien in dem Tropfen mit der aktiven Oberfläche abreagieren und nicht etwa elektrostatisch abwandern. Da weiterhin insgesamt einige 1000 Tropfen pro Chip untergebracht werden sollen, und das Spotting in endlicher Zeit beendet sein soll, ist es wünschenswert eine Technik mit hoher Parallelität des Spotting-Geräts zu entwickeln. Das wiederum erfordert, dass die Vorlageplatten aus denen die Tropfen entnommen werden, in höherer Dichte als in den bekannten 384er Platten (Raster 4,5mm) untergebracht sind, weil sonst bei einer Chipgröße von 27x18 mm nur 24 Stahlnadeln benutzt werden könnten.

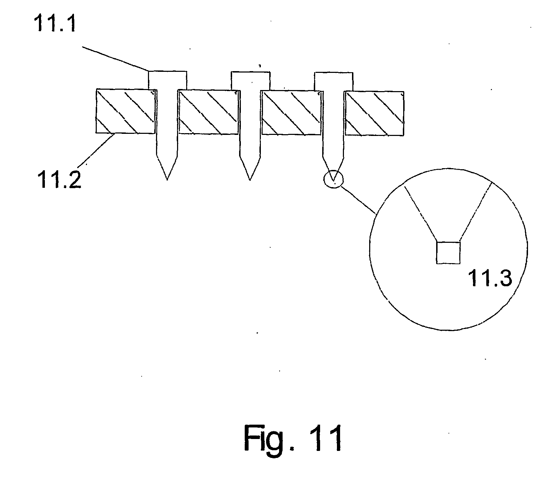

Zur Realisierung der gewünschten Positioniergenauigkeit wurden die Toleranzen bei der Fertigung von Nadel und Nadelführung eng gewählt. Fig. 11 zeigt schematisch solche Nadeln 11.1, die in einem Träger 11.2 mit Bohrungen zur Aufnahme der Nadeln gehalten werden. Die Nadeln werden z.B. durch spanende Bearbeitung und Schleifen hergestellt und die Spitzen 11.3 der Nadeln verjüngen sich auf 100μm Durchmesser. Damit sich die Nadel bei dem Drehvorgang nicht verbiegt, wurde ein harter Werkstoff (Wolframkarbid) gewählt, der üblicherweise zur Werkzeugherstellung benutzt wird. Die Nadelführung 11.2 wurde in der erforderlichen Präzision in Aluminium hergestellt.

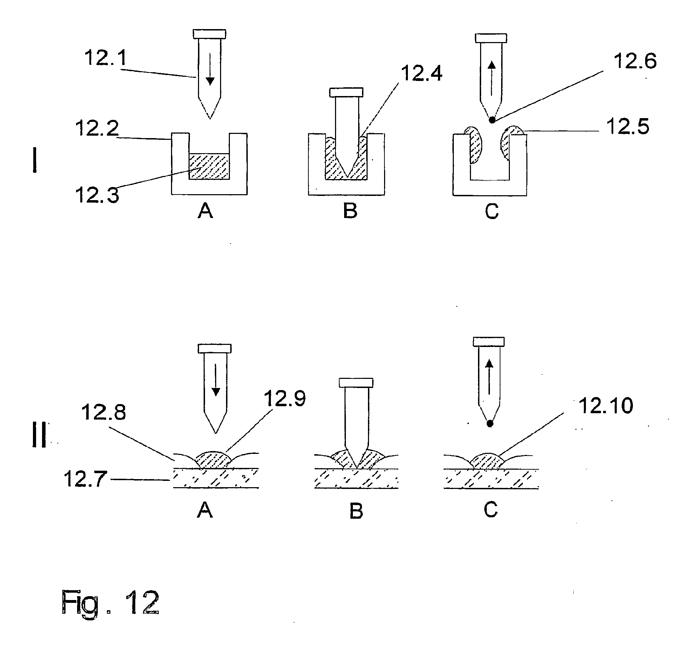

Um eine hohe Dichte der Kavitäten bzw. Wells in Vorlageplatten zu erreichen, wurde zunächst die Verwendung von 1536er Mikrotiterplatten versucht. Das Resultat ist, dass die Nadeln 12.1 (siehe Figur 12 I) mit der Wandung 12.2 der Kavität einen Kapillarspalt 12.4 ausbilden, der nach einigen Eintauchvorgängen dazu führt, dass die Flüssigkeit 12.3 nicht mehr am Boden der Kavität befindlich ist, sondern in Tröpfchenform 12.5 an der Wandung der Kavität klebt (Bild 12 IC).

Eine denkbare Lösung ist es, die Nadel am Schaft dünner zu gestalten, um den Kapillarspalt zu erhöhen, somit den Transfer der Flüssigkeit vom Boden der Kavität auf die Wandung zu vermindern. Dies ist jedoch aufgrund der gewünschten Positionierungsgenauigkeit nicht möglich, da ein dünnerer Schaftdurchmesser zu stärkerer Verbiegung führt.

Zum Aufbringen von Flüssigkeitsproben 12.3 auf eine Sensoranordnung (13.1, siehe Fig. 13) mit einer Vielzahl von Sensorfeldern, welche in einem in einer Ebene liegenden Raster angeordnet sind, wird vorgeschlagen die Flüssigkeitstropfen 12.10 (siehe Fig. 12 II) auf eine Anordnung von in einer Ebene liegenden Flüssigkeitsaufnahmebereichen 12.9 aufzubringen. Dies ist eine Form von Umkopieren oder Reformatting. Dabei ist jeder Flüssigkeitsaufnahmebereich 12.9 von einem Flüssigkeitsabstoßungsbereich 12.8 umgeben, der aus einem die Flüssigkeitstropfen abstoßenden Material besteht, so dass Flüssigkeitsproben in Form von Tropfen mit variablem Durchmesser in den Flüssigkeitsaufnahmebereichen 12.9 gehalten werden. Die Flüssigkeitsaufnahmebereiche 12.9 sind in einem mit dem Raster der Sensorfelder kompatiblen Raster vorgesehen.

Hierzu können die Flüssigkeiten z.B. mit relativ dicken Nadeln aus den 384er Mikrotiterplatte herausgeholt werden, wobei bei diesen großen Kavitäten der Kapillareffekt noch keine Rolle spielt, und auf eine Glasplatte abgesetzt, die mit Teflon®-Lack umrandete Felder besitzt. Die Flüssigkeit stößt sich von der Teflonumrandung ab und wird in Tropfenform gehalten, wie in Fig. 12 IIA gezeigt.

Um die Tropfen 12.10 zu übertragen wird die Anordnung von Übertragungsstiften 12.1 in die Flüssigkeitstropfen 12.10 auf den Flüssigkeitsaufnahmebereichen 12.9 eingetaucht, um die Spitzen 12.6 der Übertragungsstifte zu benetzen. Dabei sind die Übertragungsstifte 12.1 in einem mit dem Raster der Sensorfelder kompatiblen Raster vorgesehen, z.B. dem gleichen Raster oder einem Unterraster. Dadurch ist eine hochparallele Übertragung möglich. Dann werden die benetzten Übertragungsstifte aus den Flüssigkeitstropfen herausgezogen und über die Sensoranordnung bewegt. Schließlich werden die benetzten Übertragungsstifte über den Sensorfeldern abgesenkt, um die Flüssigkeit an den benetzten Übertragungsstiften mit den Sensorfeldern in Berührung zu bringen.

Aufgrund der Möglichkeit der Tropfen sich auszudehnen, treten keine Probleme mit Kapillarkräften auf, und aufgrund der Flüssigkeitsabstoßung durch Material 12.8 geschieht eine vollständige und unproblematische Benetzung der Stifte, die wiederum ausreichend dick sein können, um die gewünschte Positionierungsgenauigkeit zu gewährleisten. Vorzugsweise erheben sich die Flüssigkeitsabstoßungsbereiche 12.8 gegenüber der Ebene der Flüssigkeitsaufnahmebereiche 12.9 um maximal 200 μm, bevorzugt um nur 100 μm und besonders bevorzugt um nur 30 μm. Es ist damit bevorzugt, dass die Anordnung der Flüssigkeitsaufnahmebereiche möglichst flach ist.

**Patentansprüche**

1. SPR-Sensoranordnung (13.1) mit einem strahlungsleitenden Substrat (13.9), das eine erste und eine zweite Oberfläche (13.2, 13.3) aufweist, wobei die erste Oberfläche (13.2) eine Strahlungsdurchtrittsfläche ist, durch welche Strahlung eines vorgegebenen Wellenlängenbereichs in das Substrat (13.9) eingekoppelt bzw. aus dem Substrat (13.9) ausgekoppelt werden kann, und auf der zweiten Oberfläche (13.3)

   - eine Vielzahl von Sensorfeldern (13.4) vorgesehen sind, welche eine SPR-geeignete Schicht umfassen und ausgebildet sind, um aus dem Substrat (13.9) kommende Strahlung des vorgegebenen Wellenlängenbereichs, die in einem vorbestimmten Winkelbereich einfällt, zu reflektieren, sowie
   - Trennbereiche (13.5) zur Trennung der einzelnen Sensorfelder (13.4) von den jeweils benachbarten Sensorfeldern (13.4), wobei die Trennbereiche (13.5) ausgebildet sind aus dem Substrat (13.9) kommende Strahlung des vorgegebenen Wellenlängenbereichs, die in dem vorbestimmten Winkelbereich einfällt, zu absorbieren, um in der an den Sensorfeldern (13.4) reflektierten Strahlung einen Kontrast zwischen den Sensorfeldern (13.4) und den Trennbereichen (13.5) zu erzeugen, wobei die Trennbereiche (13.5) durch eine Trennmittelschicht (13.10) auf der zweiten Oberfläche (13.3) des Substrats (13.9) gebildet sind,

   wobei die Trennmittelschicht (13.10) zumindest in einem ersten Bereich (13.8), der an die Grenzfläche zwischen der Trennmittelschicht (13.10) und dem Substrat (13.9) grenzt, für aus dem Substrat kommende Strahlung des vorgegebenen Wellenlängenbereichs, die in dem vorbestimmten Winkelbereich einfällt, an der Grenzfläche zwischen der Trennmittelschicht (13.10) und dem Substrat (13.9) eine Reflektivität kleiner 0,5 bewirkt, **dadurch gekennzeichnet, dass** die Trennmittelschicht (13.10) zumindest in einem zweiten Bereich (13.7), der über dem ersten Bereich (13.8) auf der dem Substrat (13.9) abgewandten Seite liegt, für Strahlung des vorgegebenen Wellenlängenbereichs eine Extinktion größer 0,95 bewirkt, und die Trennmittelschicht (13.10) eine Dicke (D) von höchstens 1 μm aufweist.

2. SPR-Sensoranordnung nach Anspruch 1, **dadurch gekennzeichnet, dass** der erste und der zweite Bereich (13.7, 13.8) zu einer einheitlichen Schicht (13.10) gehören.

3. SPR-Sensoranordnung nach Anspruch 2, **dadurch gekennzeichnet, dass** die einheitliche Schicht (13.10) Titan oder Germanium umfasst.

4. SPR-Sensoranordnung nach Anspruch 1, **dadurch gekennzeichnet, dass** der erste Bereich (13.8) zu einer ersten, von der Trennmittelschicht (13.10) umfassten Schicht (13.11) gehört, und der zweite Bereich (13.7) zu einer zweiten, von der Trennmittelschicht (13.10) umfassten und von der ersten Schicht (13.11) verschiedenen Schicht (13.12) gehört.

5.  SPR-Sensoranordnung nach Anspruch 4, **dadurch gekennzeichnet, dass** die erste Schicht (13.11) Silizium oder Germanium umfasst.

6.  SPR-Sensoranordnung nach einem der Ansprüche 4 oder 5, **dadurch gekennzeichnet, dass** die zweite Schicht (13.12) Germanium oder ein Metall umfasst, vorzugsweise Titan oder Chrom.

7.  SPR-Sensoranordnung nach einem der Ansprüche 1 bis 6, **dadurch gekennzeichnet, dass** der erste und zweite Bereich (13.8, 13.7) jeweils eine Dicke (D) von höchstens 1 $\mu$m aufweisen.

8.  SPR-Sensoranordnung nach einem der Ansprüche 1 bis 7, **dadurch gekennzeichnet, dass** der zweite Bereich (13.7) eine Dicke (D) von mehr als 70 nm, vorzugsweise von mehr als 200 nm aufweist.

9.  SPR-Sensoranordnung nach einem der Ansprüche 1 bis 8, **dadurch gekennzeichnet, dass** der erste Bereich (13.8) eine Dicke (D) von mehr als 10 nm, vorzugsweise von mehr als 20 nm aufweist.

10. SPR-Sensoranordnung nach einem der Ansprüche 1 bis 9, **dadurch gekennzeichnet, dass** der erste und zweite Bereich (13.8, 13.7) zusammen eine Dicke (D) von mindestens 80 nm aufweist, vorzugsweise von mindestens 100 nm und besonders bevorzugt von mindestens 200 nm.

11. SPR-Sensoranordnung nach einem der vorangegangenen Ansprüche, **dadurch gekennzeichnet, dass** auf dem Substrat (13.1) mindestens 100, vorzugsweise mindestens 1000 Sensorfelder (13,4) angeordnet sind.

12. SPR-Sensoranordnung nach einem der vorangegangenen Ansprüche, **dadurch gekennzeichnet, dass** die Sensorfelder (13.4) jeweils eine Flächenausdehnung von kleiner oder gleich 6.2 x $10^{-4}$ cm$^2$ haben.

13. SPR-Sensoranordnung nach einem der vorangegangenen Ansprüche, **dadurch gekennzeichnet, dass** die Sensorfelder (13.4) eine Flächendichte von größer oder gleich 250 Felder pro cm$^2$ hat.

14. SPR-Sensoranordnung nach einem der vorangegangenen Ansprüche, **dadurch gekennzeichnet, dass** das Substrat (13.9) als flaches Plättchen ausgebildet ist.

15. SPR-Sensoranordnung nach Anspruch 14, **dadurch gekennzeichnet, dass** das flache Plättchen eine Gesamtfläche von kleiner oder gleich 20 cm$^2$ hat.

16. Optische Messanordnung, umfassend:

    eine SPR-Sensoranordnung nach einem der Ansprüche 1 bis 15,
    ein optisches Mittel (2.11, 2.12) zum Einkoppeln von Strahlung des vorgegebenen Wellenlängenbereichs in das Substrat (13.9) der Sensoranordnung durch die erste Oberfläche (13.2), mit einem Winkel innerhalb des vorbestimmten Winkelbereichs, und zum Auskoppeln der von den Sensorfeldern (13.4) reflektierten Strahlung,
    eine Strahlungsquelle, um dem optischen Mittel Strahlung des vorgegebenen Wellenlängenbereichs zuzuführen, und
    einen Detektor, der angeordnet ist, um die aus dem optischen Mittel ausgekoppelte und von den Sensorfeldern (13.4) reflektierte Strahlung zu erfassen.

17. Verfahren zur Herstellung einer SPR-Sensoranordnung nach einem der Ansprüche 1 bis 15, umfassend die Schritte:

    Bildung einer Trennmittelschicht (13.10) auf dem Substrat (13.9), so dass freie Bereiche entstehen, welche Sensorfelder (13.4) definieren, wobei das Aufbringen der Trennmittelschicht (13.9) durch Aufdampfen erfolgt, und
    Aufbringen einer SPR-geeigneten Schicht (13.6) zumindest in den freien Bereichen, um die Sensorfelder (13.4) zu bilden.

18. Verfahren nach Anspruch 17, **dadurch gekennzeichnet, dass** der Schritt zur Bildung der Trennmittelschicht (13.10) umfasst

    Aufbringen einer strukturierbaren Lackschicht (6.3) auf dem Substrat (6.4);
    Strukturieren der Lackschicht (6.3), um die freien Bereiche zu definieren, und Entfernen des Lacks derart, dass nur an den Stellen der freien Bereiche Lack verbleibt
    Aufdampfen eines oder mehr erster Materialien zur Bildung des ersten Bereichs (13.8) und anschließend eines oder mehr zweiter Materialien zur Bildung des zweiten Bereichs (13.7); und
    Durchführen eines Lift-Off, um den an den freien Bereichen befindlichen und beschichteten Lack abzuheben, so dass an den freien Bereichen das Substrat freigelegt wird.

19. Verfahren nach Anspruch 17, **dadurch gekenn-**

**zeichnet**, das der Schritt zur Bildung der Trennmittelschicht (13.10) umfasst:

Aufbringen einer strukturierten Lackschicht mittel Siebdrucktechnik;
Aufdampfen eines oder mehr erster Materialien zur Bildung des ersten Bereichs (13.8) und anschließend eines oder mehr zweiter Materialien zur Bildung des zweiten Bereichs (13.7);
Durchführen eines Lift-Off, um den an den freien Bereichen befindlichen und beschichteten Lack abzuheben, so dass an den freien Bereichen das Substrat freigelegt wird.

20. Verfahren nach Anspruch 17, **dadurch gekennzeichnet, dass** der Schritt zur Bildung der Trennmittelschicht (13.10) umfasst:

Aufdampfen des Trennmittelmaterials homogen über dem ganzen Substrat (6.4);
Schützen der späteren Trennbereiche mittels strukturierbarem Lack;
Freilegen der Sensorfelder durch selektives Ätzen und Ablösen des Schutzlacks.

21. Verfahren nach einem der Ansprüche 17 bis 20, **dadurch gekennzeichnet, dass** der Schritt zum Aufbringen einer SPR-geeigneten Schicht (13.6) umfasst:

Aufdampfen einer SPR-geeigneten Schicht (13.6), vorzugsweise aus Gold, auf die freien Bereiche und die Trennmittelschicht.

**Claims**

1. SPR sensor arrangement (13.1) having a radiation-conducting substrate (13.9) which has a first and a second surface (13.2, 13.3), wherein the first surface (13.2) is a radiation passage surface, through which radiation of a preset wavelength range may be coupled into the substrate (13.9) or uncoupled from the substrate (13.9), and on the second surface (13.3)

- a plurality of sensor fields (13.4) are provided which comprise an SPR-sensitised layer and are designed in order to reflect radiation coming from the substrate (13.9) of the preset wavelength range which is incident in a predetermined angular range, and
- separating regions (13.5) to separate the individual sensor fields (13.4) from the particular adjacent sensor fields (13.4), wherein the separating regions (13.5) are designed to absorb radiation coming from the substrate (13.9) of the preset wavelength range which is incident in the predetermined angular range in order to produce in the radiation reflected at the sensor fields (13.4), a contrast between the sensor fields (13.4) and the separating regions (13.5), wherein the separating regions (13.5) are formed by a separating means layer (13.10) on the second surface (13.3) of the substrate (13.9), wherein the separating means layer (13.10) effects a reflectivity of less than 0.5 at least in a first region (13.8), which borders on the boundary surface between the separating means layer (13.10) and the substrate (13.9), for radiation coming from the substrate of the preset wavelength range which is incident in the predetermined angular range, at the boundary surface between the separating means layer (13.10) and the substrate (13.9),

**characterised in that**

the separating means layer (13.10) effects an extinction greater than 0.95 at least in a second region (13.7), which lies above the first region (13.8) on the side facing away from the substrate (13.9), for radiation of the preset wavelength range, and
the separating means layer (13.10) has a thickness (D) of 1 $\mu$m at the most.

2. SPR sensor arrangement according to claim 1, **characterised in that** the first and the second region (13.7, 13.8) belong to a uniform layer (13.10).

3. SPR sensor arrangement according to claim 2, **characterised in that** the uniform layer (13.10) comprises titanium or germanium.

4. SPR sensor arrangement according to claim 1, **characterised in that** the first region (13.8) belongs to a first layer (13.11) surrounded by the separating means layer (13.10), and the second region (13.7) belongs to a second layer (13.12) which is surrounded by the separating means layer (13.10) and different from the first layer (13.11).

5. SPR sensor arrangement according to claim 4, **characterised in that** the first layer (13.11) comprises silicon or germanium.

6. SPR sensor arrangement according to one of claims 4 or 5, **characterised in that** the second layer (13.12) comprises germanium or a metal, preferably titanium or chromium.

7. SPR sensor arrangement according to one of claims 1 to 6, **characterised in that** the first and second region (13.8, 13.7) have in each case a thickness (D) of 1 $\mu$m at the most.

8. SPR sensor arrangement according to one of claims 1 to 7, **characterised in that** the second region (13.7) has a thickness (D) or more than 70 nm, preferably of more than 200 nm.

9. SPR sensor arrangement according to one of claims 1 to 8, **characterised in that** the first region (13.8) has a thickness (D) of more than 10 nm, preferably of more than 20 nm.

10. SPR sensor arrangement according to one of claims 1 to 9, **characterised in that** the first and second region (13.8, 13.7) together have a thickness (D) of at least 80 nm, preferably of at least 100 nm and particularly preferably of at least 200 nm.

11. SPR sensor arrangement according to one of the preceding claims, **characterised in that** at least 100, preferably at least 1,000, sensor fields (13.4) are arranged on the substrate (13.1).

12. SPR sensor arrangement according to one of the preceding claims, **characterised in that** the sensor fields (13.4) have in each case a surface expansion of less than or equal to $6.2 \times 10^{-4}$ cm$^2$.

13. SPR sensor arrangement according to one of the preceding claims, **characterised in that** the sensor fields (13.4) have a surface density of greater than or equal to 250 fields per cm$^2$.

14. SPR sensor arrangement according to one of the preceding claims, **characterised in that** the substrate (13.9) is designed as a flat small plate.

15. SPR sensor arrangement according to claim 14, **characterised in that** the flat small plate has an overall surface of less than or equal to 20 cm$^2$.

16. Optical measuring arrangement comprising:

an SPR sensor arrangement according to one of claims 1 to 15,
an optical means (2.11, 2.12) to couple radiation of the preset wavelength range into the substrate (13.9) of the sensor arrangement through the first surface (13.2) at an angle within the predetermined angular range, and to uncouple the radiation reflected by the sensor fields (13.4),
a radiation source in order to supply radiation of the preset wavelength range to the optical means, and
a detector which is arranged in order to record the radiation uncoupled from the optical means and that reflected by the sensor fields (13.4).

17. Process for producing an SPR sensor arrangement according to one of claims 1 to 15, comprising the steps:

forming a separating means layer (13.10) on the substrate (13.9), so that free regions are produced which define sensor fields (13.4), wherein the application of the separating means layer (13.9) is effected by evaporation coating, and applying an SPR-sensitised layer (13.6) at least in the free regions in order to form the sensor fields (13.4).

18. Process according to claim 17, **characterised in that** the step for forming the separating means layer (13.10) comprises

applying a structurable lacquer layer (6.3) to the substrate (6.4);
structuring the lacquer layer (6.3) in order to define the free regions, and removing the lacquer such that lacquer remains only at the points of the free regions
evaporation coating of one or more first materials to form the first region (13.8) and then of one or more second materials to form the second region (13.7); and
carrying out a lift-off in order to remove the coated lacquer situated at the free regions, so that the substrate is exposed at the free regions.

19. Process according to claim 17, **characterised in that** the step for forming the separating means layer (13.10) comprises:

applying a structured lacquer layer by means of screen-printing technology;
evaporation coating of one or more first materials to form the first region (13.8) and then of one or more second materials to form the second region (13.7);
carrying out a lift-off in order to remove the coated lacquer situated at the free regions, so that the substrate is exposed at the free regions.

20. Process according to claim 17, **characterised in that** the step for forming the separating means layer (13.10) comprises:

evaporation coating of the separating means material homogeneously over the entire substrate (6.4);
protecting the later separating regions by means of structurable lacquer;
exposing the sensor fields by selective etching and peeling of the protective lacquer.

21. Process according to one of claims 17 to 20, **characterised in that** the step for applying an SPR-sensitised layer (13.6) comprises:

evaporation coating of an SPR-sensitised layer (13.6), preferably of gold, onto the free regions and the separating means layer.

**Revendications**

1. Système de capteurs SPR (13.1), avec un substrat (13.9) guidant un rayonnement, présentant une première et une deuxième surface (13.2, 13.3), la première surface (13.2) étant une surface de passage de rayonnement, à travers laquelle un rayonnement d'une plage de longueurs d'ondes prédéterminée peut être injecté dans le substrat (13.9) ou extrait du substrat (13.9) et, sur la deuxième surface (13.3),

   - sont prévus une pluralité de champs de capteurs (13.4), comprenant une couche appropriée au SPR et réalisés pour réfléchir un rayonnement venant du substrat (13.9), de la plage de longueurs d'ondes prédéterminée, incident dans une plage angulaire prédéterminée, et
   - des zones de séparation (13.5), pour la séparation des différents champs de capteurs (13.4), vis-à-vis des champs de capteurs (13.4) chaque fois voisins, où les zones de séparation (13.5) sont réalisées pour absorber un rayonnement, provenant du substrat, de la plage de longueurs d'ondes prédéterminée, incident dans la plage angulaire prédéterminée, pour produire, dans le rayonnement réfléchi sur les champs de capteurs (13.4), un contraste entre les champs de capteurs (13.4) et les zones de séparation (13.5), les zones de séparation (13.5) étant formées par une couche de séparation médiane (13.10) sur la deuxième surface (13.3) du substrat (13.9),

   la couche de séparation médiane (13.10), au moins dans une première zone (13.8), limitée à la surface limite entre la couche de séparation médiane (13.10) et le substrat (13.9), pour le rayonnement, provenant du substrat et ayant la plage de longueurs d'ondes prédéterminée, incident dans la plage angulaire prédéterminée, à la surface limite entre la couche de séparation médiane (13.10) et le substrat (13.9), provoquant une réflectivité inférieure à 0,5, **caractérisé en ce que**
   la couche de séparation médiane (13.10), au moins dans une deuxième zone (13.7), située au-dessus de la première zone (13.8), sur la face tournée vers le substrat (13.9), pour le rayonnement ayant la plage de longueurs d'ondes prédéterminée, provoquant une extinction supérieure à 0,95, et
   la couche de séparation médiane (13.10) présente une épaisseur (D) d'une valeur maximale de 1 μm.

2. Système de capteurs SPR selon la revendication 1, **caractérisé en ce que** la première et la deuxième zone (13.7, 13.8) appartiennent à une couche unitaire (13.10).

3. Système de capteurs SPR selon la revendication 2, **caractérisé en ce que** la couche unitaire (13.10) comprend du titane ou du germanium.

4. Système de capteurs SPR selon la revendication 1, **caractérisé en ce que** la première zone (13.8) appartient à une première couche (13.11) entourée par la couche de séparation médiane (13.10), et la deuxième zone (13.7) appartient à une deuxième couche (13.12), entourée par la couche de séparation médiane (13.10) et différente de la première couche (13.11).

5. Système de capteurs SPR selon la revendication 4, **caractérisé en ce que** la première couche (13.11) comprend du silicium ou du germanium.

6. Système de capteurs SPR selon l'une des revendications 4 ou 5, **caractérisé en ce que** la deuxième couche (13.12) comprend du germanium, ou un métal, de préférence du titane ou du chrome.

7. Système de capteurs SPR selon l'une des revendications 1 à 6, **caractérisé en ce que** la première et la deuxième zone (13.8, 13.7) présentent chacune une épaisseur (D) d'une valeur maximale de 1 μm.

8. Système de capteurs SPR selon l'une des revendications 1 à 7, **caractérisé en ce que** la deuxième zone (13.7) présente une épaisseur (D) d'une valeur supérieure à 70 nm, de préférence supérieure à 200 nm.

9. Système de capteurs SPR selon l'une des revendications 1 à 8, **caractérisé en ce que** la première zone (13.8) présente une épaisseur (D) d'une valeur supérieure à 10 nm, de préférence supérieure à 20 nm.

10. Système de capteurs SPR selon l'une des revendications 1 à 9, **caractérisé en ce que** la première et la deuxième zone (13.8, 13.7) présentent conjointement une épaisseur (D) d'au moins 80 nm, de préférence d'au moins 100 nm et, de façon particulièrement préférée, d'au moins 200 nm.

11. Système de capteurs SPR selon l'une des revendications précédentes, **caractérisé en ce qu'**au moins 100, de préférence au moins 1000 champs de capteurs (13.4), sont disposés sur le substrat (13.1).

12. Système de capteurs SPR selon l'une des revendications précédentes, **caractérisé en ce que** les champs de capteurs (13.4) ont chacun une étendue de surface inférieure ou égale à 6,2 x 10⁻⁴ cm².

**13.** Système de capteurs SPR selon l'une des revendications précédentes, **caractérisé en ce que** les champs de capteurs (13.4) ont une densité de surface supérieure ou égale à 250 champs par cm².

**14.** Système de capteurs SPR selon l'une des revendications précédentes, **caractérisé en ce que** le substrat (13.9) est réalisé sous forme de plaquette plate.

**15.** Système de capteurs SPR selon la revendication 14, **caractérisé en ce que** la plaquette plate présente une aire totale inférieure ou égale à 20 cm².

**16.** Système de capteurs optique, comprenant :

un système de capteurs SPR selon l'une des revendications 1 à 15, un moyen optique (2.11, 2.12) pour injecter un rayonnement, de la plage de longueurs d'ondes prédéterminée, dans le substrat (13.9) du système de capteurs, en traversant la première surface (13.2), avec un angle situé dans les limites de la plage angulaire prédéterminée, et pour extraire le rayonnement réfléchi par les champs de capteurs (13.4), une source de rayonnement, pour amener au moyen optique un rayonnement de la plage de longueurs d'ondes prédéterminée, et un détecteur, disposé pour détecter le rayonnement extrait du moyen optique et réfléchi par les champs de capteurs (13.4).

**17.** Procédé de fabrication d'un système de capteurs SPR selon l'une des revendications 1 à 15, comprenant les étapes de :

formation d'une couche de séparation médiane (13.10) sur le substrat (13.9), de manière qu'apparaissent des zones libres, qui définissent des champs de capteurs (13.4), l'application de la couche de séparation médiane (13.9) s'effectuant par dépôt par évaporation, et application d'une couche appropriée au SPR (13.6), au moins dans les zones libres, pour former les champs de capteurs (13.4).

**18.** Procédé selon la revendication 17, **caractérisé en ce que** l'étape de formation de la couche de séparation médiane (13.10) comprend :

l'application d'une couche de vernis (6.3) structurable sur le substrat (6.4) ; la structuration de la couche de vernis (6.3), pour définir les zones libres, et enlèvement du vernis, de manière que du vernis ne subsiste qu'aux emplacement des zones libres ; l'application par dépôt par évaporation d'un ou plusieurs premiers matériaux pour former la première zone (13.8) et ensuite d'un ou plusieurs deuxièmes matériaux pour former la deuxième zone (13.7) ; et l'exécution d'un Lift-Off, pour enlever le vernis se trouvant sur les zones libres et appliqué en couche de revêtement, de manière que le substrat soit dégagé aux zones libres.

**19.** Procédé selon la revendication 17, **caractérisé en ce que** l'étape de formation de la couche de séparation médiane (13.10) comprend :

l'application d'une couche de vernis structuré par une technique de sérigraphie ; l'application par dépôt par évaporation d'un ou plusieurs premiers matériaux pour former la première zone (13.8) et ensuite d'un ou plusieurs deuxièmes matériaux pour former la deuxième zone (13.7) ; l'exécution d'un Lift-Off, pour enlever le vernis se trouvant sur les zones libres et appliqué en couche de revêtement, de manière que le substrat soit dégagé aux zones libres.

**20.** Procédé selon la revendication 17, **caractérisé en ce que** l'étape de formation de la couche de séparation médiane (13.10) comprend :

l'application par dépôt par évaporation du matériau de séparation médian, de façon homogène, sur la totalité du substrat (6.4) ; la protection des futures zones de séparation au moyen d'un vernis structurable ; le dégagement des champs de capteurs par gravure sélective et décollement du vernis de protection.

**21.** Procédé selon l'une des revendications 17 à 20, **caractérisé en ce que** l'étape d'application d'une couche appropriée au SPR (13.6) comprend ;

l'application par dépôt par évaporation d'une couche appropriée au SPR (13.6), de préférence composée d'or, sur les zones libres et la couche de séparation médiane.

Fig. 1a

Fig. 1b

Fig. 1c

EP 1 644 721 B1

2.16

2.15

2.10

2.12

Fig. 2a

2.10

2.11

$\vartheta_{SPR}$

Fig. 2b

2.15

2.16

1  2  3  4

1

2

3

4

Sensorplatte

1  5  10  15

1

5

10

15

2.510

Bild

2.17

Fig. 2c

Fig. 3

UV

4.1

4.2

4.4

4.5

4.3

Fig. 4

Brewsterwinkel

Fig. 5a

Fig. 5b

6.1

6.2

6.3

6.4

Fig. 6a

Fig. 6b

6.5

Fig. 6c

Fig 6d

6.6

Fig. 6e

Schnittlinie

Fig. 7

Fig. 8

Fig. 9

Fig. 10

11.1

11.2

11.3

Fig. 11

Fig . 12

13.3

13.4

13.5

A —————————————————————————— A'

13.1

13.2

**Fig. 13a**

13.4

13.6

13.5

13.5

13.7

13.10

D

13.8

13.8

13.7

13.9

**Fig. 13b**

Fig. 13c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0163256 A
- US 6335142 B1

- EP 1286187 A2

**In der Beschreibung aufgeführte Nicht-Patentliteratur**

- Surface Plasmon Resonance. **G. RAMSAY.** Commercial Biosensors. John Wiley & Sons, 1998